# EUROPÄISCHE PATENTSCHRIFT

(11) **EP 2 728 274 B1**
(45) Veröffentlichungstag und Bekanntmachung des Hinweises auf die Patenterteilung: **30.12.2015**
(21) Anmeldenummer: 13178868.9
(22) Anmeldetag: 01.08.2013
(51) Int. Cl.: F24H 9/12, F16K 31/00, F16K 11/04, G05D 23/02

(54) **Anordnung zur Steuerung der Temperatur in einem Trinkwassererwärmer**
Assembly for controlling the temperature in a drinking water heater
Agencement pour la commande de la température dans un chauffe-eau

(30) Priorität: 30.10.2012 DE 202012104167 U
(43) Veröffentlichungstag der Anmeldung: 07.05.2014
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A1- 1 637 817
- WO-A1-2007/114704
- DE-B- 1 166 992
- DE-U1-202012 100 069

## Beschreibung

### Technisches Gebiet

Die Erfindung betrifft eine Anordnung zur Steuerung der Temperatur in einem beheizbaren Kessel eines Trinkwassererwärmers mit den Merkmalen des Oberbegriffs des Anspruchs 1.

Trinkwassererwärmer dienen der Bereitstellung von Warmwasser in Gebäuden. Sie umfassen einen Behälter (Kessel), in dem eine den Bedürfnissen angepasste Menge an Trinkwasser erwärmt und für die Nutzung bereitgestellt wird. Wenn Warmwasser an einer Zapfstelle entnommen wird, wird dem Kessel wieder frisches, kaltes Trinkwasser zugeführt und dort erwärmt. Zur Sicherung der geschlossenen Behälter ist eine Druck- und Temperaturregelung vorgesehen. Die Druckregelung erfolgt mittels eines Sicherheitsventils in einer Sicherheitsgruppe. Wenn der Druck über einen vorgegebenen Schwellwert steigt, wird Wasser durch das Sicherheitsventil abgelassen. Dadurch sinkt der Druck.

Die Temperatur in einem solchen Kessel kann bis nahe der Verdampfungstemperatur bei 100°C steigen. Das ist aufgrund der Druckentwicklung gefährlich. Wenn die Temperatur über einen vorgegebenen Schwellwert steigt, wird heißes Wasser über einen Entlastungsablauf abgelassen und kaltes Wasser zugeführt. Durch die Zuführung des kalten Wassers sinkt die Temperatur.

In einigen Ländern werden Rohre aus nicht-temperaturbeständigem Kunststoff verwendet. Wenn heißes Wasser durch diese Rohre abgelassen wird, besteht die Gefahr, dass der Kunststoff schmilzt. Es ist daher wünschenswert, das heiße Wasser vor dem Ablassen zu kühlen. Im einfachsten Fall wird dem heißen Wasser kaltes Wasser beigemischt. Je nach Temperatur in dem Kessel ist mehr oder weniger kaltes Wasser zum Abkühlen des abgelassenen Wassers erforderlich. Die Steuerung kann über ein geeignetes, temperaturgesteuertes Ventil erfolgen.

WO 2007/114704 A1 offenbart eine Ventilanordnung für Warmwasserbereiter. Die bekannte Anordnung weist eine Verbindung zum Kessel, eine Verbindung zu einer Kaltwasserversorgung, ein PT-Ventil, ein Sicherheitsventil und eine Verbindung zum Ausdehnungsgefäß auf. Wenn die Temperatur im Kessel über einen Schwellwert steigt, öffnet das PT-Ventil, so dass kaltes Wasser in den Kessel fließt.

DE 11 66 992 und EP 1 637 817 A1 offenbaren eine Sicherheitsgruppe für Hochdruck-Warmwasserspeicher mit einem von Hand lüftbaren Sicherheitsventil. Bei dieser Anordnung wird über ein Sicherheitsventil angelüftet.

DE 20 2012 100 069 U1 der Anmelderin offenbart eine Armatur zur Druck- und Temperaturregelung der eingangs genannten Art mit den Merkmalen des Oberbegriffs nach Anspruch 1. Die Armatur weist eine Sicherheitsgruppe und einen Druckminderer auf. Zur Temperaturregelung der Kesseltemperatur ist ein Fühler vorgesehen, der sich mit steigender Temperatur ausdehnt.

Dadurch wird ein Doppelkolben derart bewegt, dass der Entlastungsablauf sowohl mit dem Kessel als auch mit der Kaltwasserzufuhr verbunden wird. Es fließen also sowohl kaltes als auch warmes Wasser ab und mischen sich im Ablauf. Dadurch wird vermieden, dass das Rohr schmilzt. Zum Testen der Funktionsfähigkeit der Anordnung wird der Kessel angelüftet. Das erfolgt über die Sicherheitsgruppe in der Armatur.

Es gibt Heizungsinstallationen, bei denen Druckminderer bereits im Eingangsbereich der Trinkwasseranordnung vorgesehen sind. Weiterhin sind Sicherheitsgruppen oft bereits in der Installation vorhanden. Dann sind komplexe Armaturen doppelt vorhanden. Die Sicherheitsgruppe ist aber zusätzlich erforderlich um anlüften zu können.

### Offenbarung der Erfindung

Es ist Aufgabe der Erfindung, eine Vorrichtung der eingangs genannten Art zu schaffen, die einfacher aufgebaut ist und welche eine kostengünstigere Möglichkeit bieten, die Funktionsfähigkeit der Armatur zu testen.

Erfindungsgemäß wird die Aufgabe dadurch gelöst, dass der Heißwasserzufuhrkanal einen geringeren Durchmesser aufweist als der zylindrische Hohlraum, und wobei der erste Ventilsitz von einer dadurch entstehenden Schulter gebildet wird, und Kolben, Griff, Heißwasserzufuhrkanal und zylindrischer Hohlraum koaxial angeordnet sind. Dadurch kann auf die Sicherheitsgruppe in der Armatur verzichtet werden, wenn diese beispielsweise bereits in der Installation vorhanden ist. Gleichermaßen ist die Armatur vorteilhafterweise ohne Druckminderer ausgebildet. Die Armatur besteht im kostengünstigsten Fall aus Kaltwasserein- und ausgang und dem ventilgesteuerten Entlastungsablauf. Zusätzlich ist lediglich die manuelle Anlüftvorrichtung vorgesehen. Auf diese Weise kann die Armatur besonders einfach, klein und kostengünstig hergestellt werden. Die Armatur ist wegen ihrer Einfachheit nur wenig anfällig und kann leicht getestet werden. Bereits in der Installation vorhandene Sicherheitsgruppen und Druckminderer behalten ihre Funktion.

Der Doppelkolben wird einerseits bei übermäßiger Erwärmung des Wassers im Kessel bewegt. Der Doppelkolben kann aber auch manuell mittels des Griffs bewegt werden.

Dadurch kann die Funktionsfähigkeit der Armatur im Betrieb getestet werden. Bei Betätigung des Griffs wird der Doppelkolben bewegt. Der Kessel wird angelüftet.Dabei öffnen die Verbindungen zwischen Kaltwasserzufuhr und Entlastungsablauf einerseits und Kessel und Entlastungsablauf andererseits.

Vorzugsweise ist der Griff über eine Spindel mit dem Kolben verbunden. Die Spindel ist koaxial zu Griff und Kolben angeordnet. Vorteilhafterweise ist der Griff in einer Richtung drehbeweglich. Dabei kann der Griff auf eine gehäusefeste Hülse aufgesetzt sein und mit einem Vorsprung oder Profil in ein in einer Richtung blockierendes Sägezahnprofil oder anderes in einer Drehrichtung blockierendes Profil an der Hülse eingreifen. Dadurch wird die Hülse bei Rotation in axialer Richtung bewegt. Dies bewirkt eine Bewegung der Spindel mit dem Kolben ebenfalls in axialer Richtung. Mit anderen Worten: Durch das Sägezahnprofil wird erreicht, dass der Kolben nur in einer Richtung bewegt werden kann. Wenn der Kolben einen maximalen Hub erreicht hat, springen Griff, Spindel und Kolben durch die Federkraft der Feder entlang der steilen Kante des Sägezahnprofils zurück in ihre ursprüngliche axiale Lage. Bei weiterer Drehung wird die Anordnung erneut bewegt. Diese Anordnung erlaubt das Anlüften durch eine Drehbewegung. Es versteht sich, dass der Griff auch derart mit dem Kolben verbunden sein kann, dass der Kolben durch eine Längsbewegung des Griffs bewegt wird.

Bei der Erfindung weist die Anordnung einen Heißwasserzufuhrkanal zur Verbindung mit dem Kessel auf, wobei der Heißwasserzufuhrkanal mit dem zylindrischen Hohlraum fluchtet und einen geringeren Durchmesser aufweist, und wobei der erste Ventilsitz von einer dadurch entstehenden Schulter gebildet wird.

Die Längsachse des Heißwasserzufuhrkanals und des damit fluchtenden zylindrischen Hohlraums kann senkrecht zur Längsachse eines durchgängigen Kaltwasserkanals zwischen Kaltwassereingang und Kaltwasserausgang verlaufen.

Die Längsachse des Entlastungsablaufs kann senkrecht zur Längsachse des Heißwasserzufuhrkanals und senkrecht zur Längsachse des Kaltwasserkanals verlaufen. Kolben, Griff, Heißwasserzufuhrkanal und zylindrischer Hohlraum sind erfindungsgemäß koaxial angeordnet.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine perspektivische Darstellung einer Anordnung zur Steuerung der Temperatur in einem beheizbaren Kessel eines Trinkwassererwärmers.
- Fig.2: ist ein vertikaler Querschnitt durch die Anordnung aus Figur 1 mit dem Steuerventil in geschlossener Stellung.
- Fig.3: ist ein vertikaler Querschnitt durch die Anordnung aus Figur 1 mit dem Steuerventil in zum Anlüften geöffneter Stellung.
- Fig.4: ist ein vertikaler Querschnitt durch die Anordnung aus Figur 1 mit dem Steuerventil in geöffneter Stellung bei zu hoher Kesseltemperatur.
- Fig.5: ist eine Explosionsdarstellung der Anordnung aus Figur 1, bei welcher der Griff zum Anlüften separat dargestellt ist.
- Fig.6: ist ein Querschnitt durch die Anordnung aus Figur 1 entlang der Schnittachse C-C.

### Beschreibung des Ausführungsbeispiels

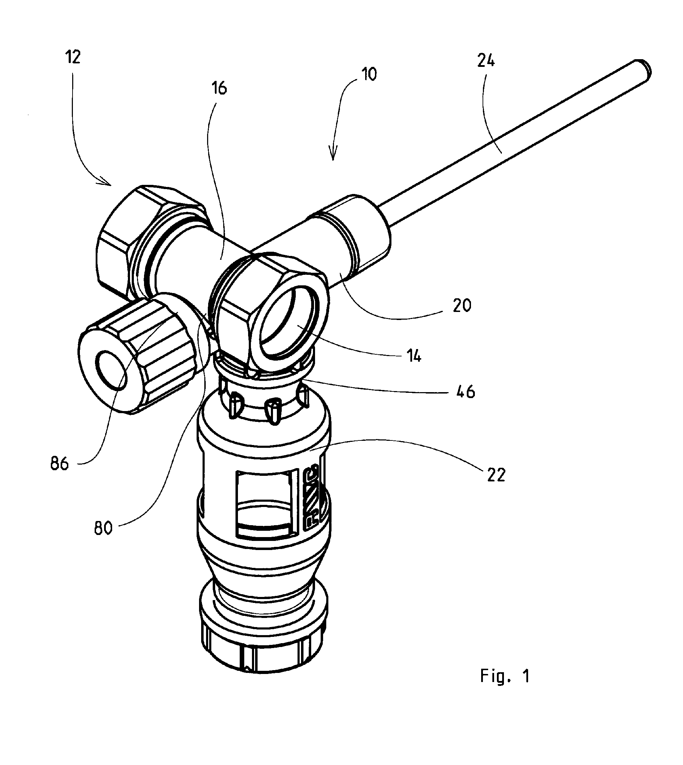

Figuren 1 bis 6 zeigen eine allgemein mit 10 bezeichnete Anordnung zur Steuerung der Temperatur im Kessel eines Trinkwassererwärmers (nicht dargestellt). Die Anordnung weist einen Kaltwassereingang 12 für kaltes Trinkwasser auf. Der Kaltwassereingang 12 wird mit einer Trinkwasserversorgung (nicht dargestellt) verbunden.

Über einen Kaltwasserkanal 16 ist der Kaltwassereingang 12 mit einem Kaltwasserausgang 14 verbunden. Der Kaltwassereingang 12 fluchtet mit dem Kaltwasserausgang 14. Der Kaltwasserausgang 14 wird mit dem Kessel des Trinkwasserbehälters verbunden.

Die Anordnung 10 weist einen Temperaturfühler 24 auf. Der Temperaturfühler 24 erstreckt sich innerhalb eines Stutzens 20 senkrecht zur Längsachse des Kaltwasserkanals 16. Am Ende des Stutzens 20 ragt der Temperaturfühler 24 durch eine Öffnung in dem Kessel in das Innere des Kessels. Nach unten erstreckt sich ein Entlastungsablauf 46 mit einem Ablauftrichter 22.

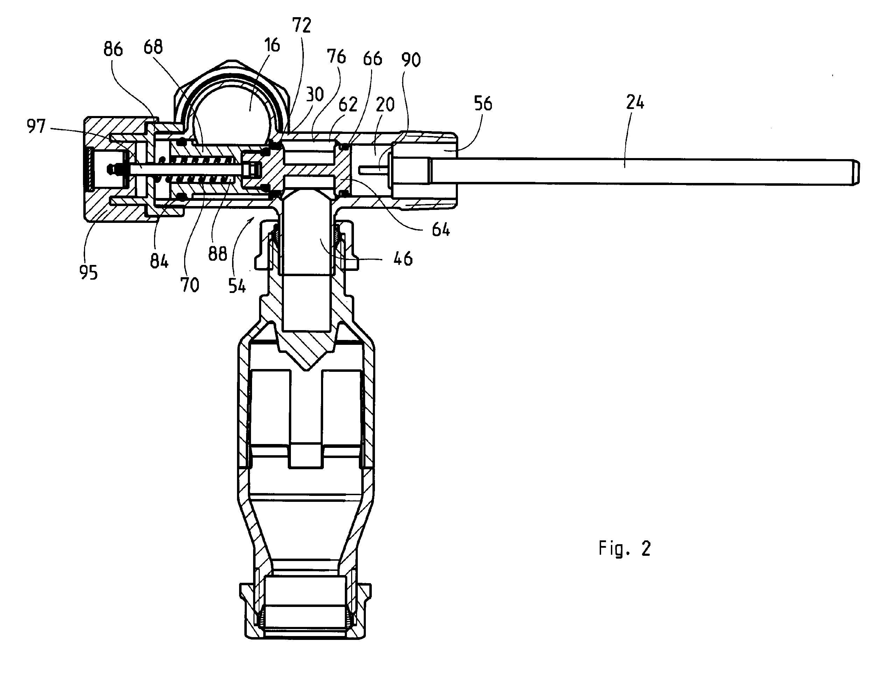

Figuren 2 bis 4 sind Schnitte durch die Anordnung, in welchem der Entlastungsablauf 46 und der Temperaturfühler 24 gut zu erkennen sind. Die Anordnung 10 weist ein Gehäuse 30 auf. Fluchtend mit der Längsachse des Stutzens 20 ist ein allgemein mit 54 bezeichnetes Temperatur-Steuerventil angeordnet.

Das Temperatur-Steuerventil 54 ist in Figuren 2 bis 4 im Detail dargestellt. Es umfasst den Temperaturfühler 24. Der Temperaturfühler 24 ist im Wesentlichen ein langgestreckter Stab der mit Wachs gefüllt ist. Der Temperaturfühler 24 ist innerhalb eines Heißwasserzufuhrkanals 56 angeordnet. Der Heißwasserzufuhrkanal 56 mündet auf der Außenseite im Inneren des Kessels. Der Temperaturfühler 24 ragt in das Kesselinnere hinein. Mit steigender Wassertemperatur dehnt der Temperaturfühler 24 sich aus.

In einer koaxialen Bohrung 62 im Gehäuse 30 ist ein Kolben 64 verschieblich geführt. Der Kolben 64 ist in Richtung des Temperaturfühlers 24 mit der Federkraft einer Feder 70 beaufschlagt. Die Bohrung 62 ist mit dem Entlastungsablauf 46 verbunden. Der Kolben 64 hat einen im Wesentlichen zylindrischen Querschnitt. An dem dem Temperaturfühler 24 zugewandten Ende des Kolbens 64 ist eine Ringdichtung 66 in einer Umfangsnut des Kolbens 64 vorgesehen. Damit wird das Innere der Bohrung 62 bzw. der Entlastungsablauf 46 gegenüber dem Heißwasserzufuhrkanal 56 abgedichtet.

Am anderen Ende des Kolbens 64 ist eine Ringnut mit einer weiteren Ringdichtung 72 vorgesehen. Im Bereich zwischen den Dichtungen 66 und 72 ist die Bohrung 62 etwas aufgeweitet, so dass ein Ringraum 76 um den Kolben 64 gebildet ist. In diesem Bereich bildet der Kolben Rippen 74. Der Ringraum 76 steht mit dem Entlastungsablauf 46 in Verbindung. Die Dichtungen 66 und 72 bilden jeweils eine Ventildichtung, die mit der Innenwandung der Bohrung 62 als Ventilsitz zusammenwirkt.

Auf der dem Temperaturfühler 24 abgewandten Seite ist ein Führungsteil 68 auf einen koaxialen Zapfen an dem Kolben 64 aufgeschraubt. Das Führungsteil 68 ist ebenfalls koaxial in der Bohrung 62 bis in einen dem Stutzen 20 gegenüberliegenden Stutzen 80 geführt. Das Führungsteil 68 ist im Verbindungsbereich zwischen Kaltwasserkanal 16 und Bohrung 62 verschieblich geführt. Auf der Seite des Stutzens 80 ist das Führungsteil 68 mit einer Ringnut auf der Außenseite versehen, in welcher eine Dichtung 84 angeordnet ist. Mit der Dichtung 84 wird der Stutzen 80 gegen die Bohrung 62 abgedichtet.

Auf den Stutzen 80 ist ein gehäusefestes Profilteil 86 aufgeschraubt. Das Führungsteil 68 ist mit einer Längsbohrung 88 versehen. In der Längsbohrung 88 sitzt die Feder 70. Die Feder stützt sich einerseits am Boden der Längsbohrung 88 in dem beweglichen Führungsteil 68 ab und andererseits an dem gehäusefesten Profilteil 86. Auf diese Weise drückt die Feder 70 das Führungsteil 68 mit dem Kolben 64 in Richtung des Temperaturfühlers 24 nach links in Figur 2 bis 4. Die Dichtungen 66 und 72 werden so an Ringschultern an der Bohrung 62 gedrückt, so dass sich der Kolben in einer Schließstellung befindet. Die Ringschultern begrenzen die Kolbenbewegung des Kolbens 64 nach rechts in Figur 2 bis 4. Das Profilteil 86 begrenzt die Kolbenbewegung des Kolbens 64 nach links in Figur 2 bis 4.

Figur 2 zeigt die Anordnung mit geschlossenem Ventil. Durch die Dichtung 72 wird der Kaltwasserkanal 16 von der Bohrung 62 und dem Entlastungsablauf 46 getrennt. Der Heißwasserzufuhrkanal 56 wird ebenfalls von der Bohrung 62 und dem Entlastungsablauf 46 getrennt.

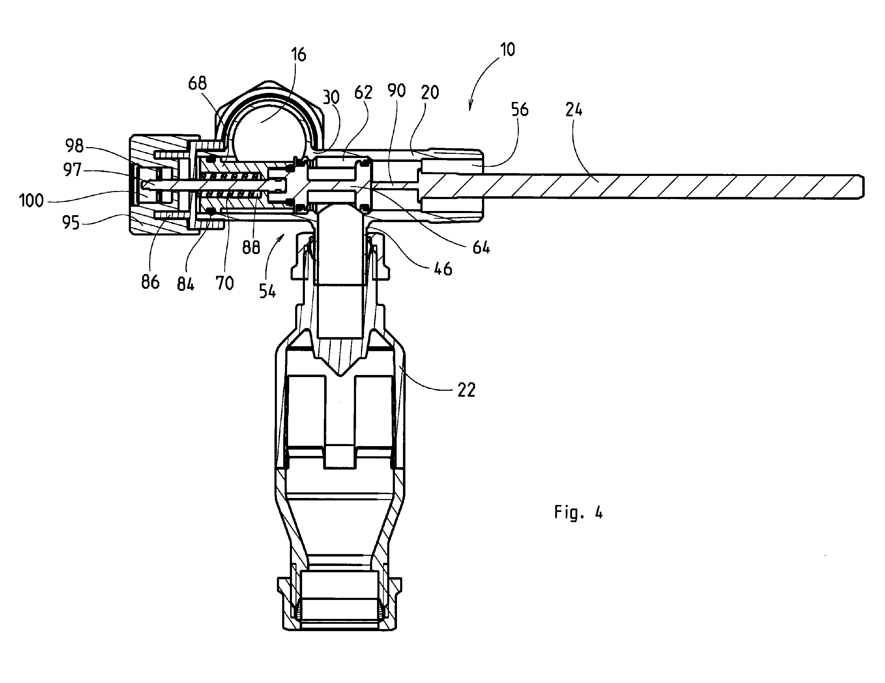

Wenn der Temperaturfühler 24 sich ausdehnt, drückt er mit einem Zapfen 90 auf den Kolben 64 und schiebt diesen entgegen der Federkraft der Feder 70 in Öffnungsrichtung nach links in den Darstellungen. Dadurch werden die beiden Teile des Steuerventils geöffnet. Dies ist in Figur 4 dargestellt. Das dem Temperaturfühler zugewandte Ende des Kolbens 64 endet im Bereich des Entlastungsablaufs 46. Heißes Wasser aus dem Kessel kann dann durch den Heißwasserzufuhrkanal 56 in den Entlastungsablauf 46 fließen.

Mit einer Bewegung des Kolbens 64 in Öffnungsrichtung öffnet sich auch der zweite Teil des Steuerventils. Dabei wird eine Verbindung zwischen dem Kaltwasserkanal 16 und der Bohrung 62 hergestellt, die weiterhin über den Ringraum 76 mit dem Entlastungsablauf 46 verbunden ist. Der Kaltwasserkanal 16 ist ständig mit kaltem Wasser gefüllt. Wenn das aus dem Kolben mit der Dichtung 72 gebildete Ventil öffnet, fließt kaltes Wasser in den Bereich der Bohrung 62. Die Bohrung 62 hat im Bereich zwischen den Dichtungen 66 und 72 einen größeren Durchmesser. Dadurch wird der Ringraum 76 gebildet. Das Kaltwasser kann problemlos am Kolben 64 vorbei in den Entlastungsablauf 46 fließen. Dort kühlt es das heiße Wasser, welches aus dem Heizwasserzufuhrkanal 56 bei gleicher, geöffneter Kolbenstellung an der Dichtung 66 vorbei in den Entlastungsablauf 46 fließt.

Man erkennt, dass die Druck-wirksamen Endflächen des Kolbens 64 gleich sind. Auf die in den Darstellungen rechte Endfläche wirkt der Kesseldruck über den Heißwasserzufuhrkanal 56. Auf die linke Endfläche wirkt der Kesseldruck über den Kaltwasserkanal 16. Dadurch wird gewährleistet, dass unabhängig vom Kesseldruck immer eine Kompensation stattfindet und eine Bewegung des Kolbens ausschließlich bei Änderung der Temperatur, nicht aber bei Änderung des Kesseldrucks erfolgt.

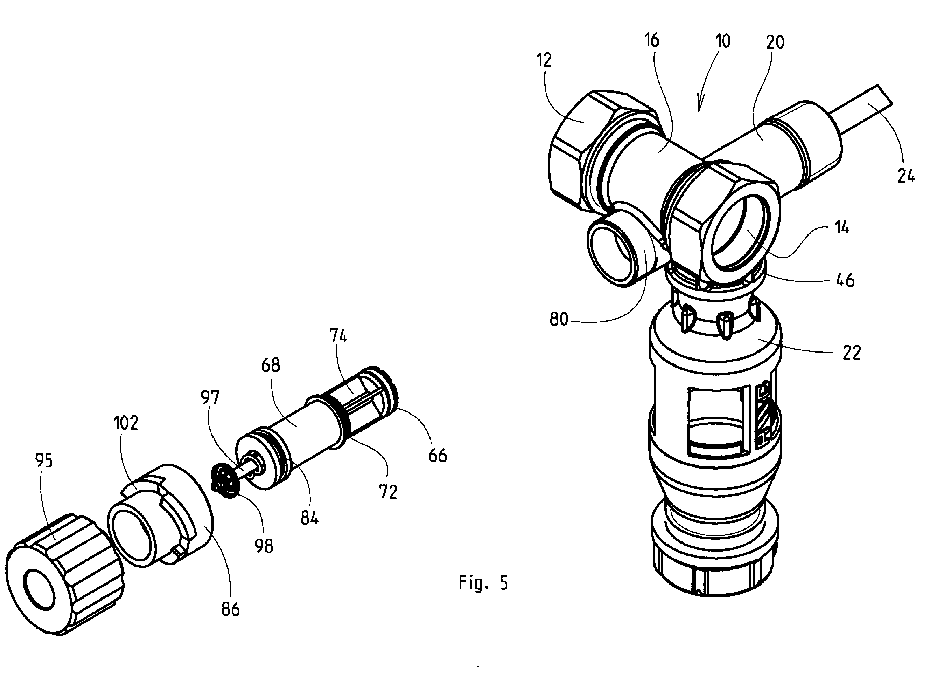

Es ist vorgesehen, dass der Doppelkolben entsprechend der Norm angelüftet wird. Dies ist insbesondere sinnvoll, wenn statt eines Ausdehnungsgefäßes ein Luftpolster im Kessel verwendet wird. Für die Anlüftung ist ein handbetätigter Griff 95 vorgesehen, welcher über eine Spindel 97 mit dem Kolben 64 verbunden ist. Die Spindel 97 erstreckt sich koaxial durch den Hohlraum 88 in dem Führungsteil 68 bis zum Zapfen an dem Kolben 64. Der Zapfen weist eine Bohrung auf, in welche die Spindel 97 eingesteckt ist. Am anderen Ende der Spindel 97 ist eine Sicherungsscheibe 98 aufgesteckt. Diese ist in Figur 5 gut zu erkennen. Die Spindel 97 ragt durch eine Bohrung im Boden des Griffs 97 und erstreckt sich bis in eine Öffnung 100. Mit der Sicherungsscheibe 98 wird die Spindel in der Öffnung gesichert und kann nicht herausrutschen. Der Griff 95 ist drehbeweglich gegenüber der Spindel 97. Bei einer Axialbewegung des Griffs 95 nach links in den Darstellungen, d.h. in Öffnungsrichtung des Kolbens 64 folgt die Sicherungsscheibe mit der Spindel. Auf diese Weise sind Griff 95, Führungsteil 68, Spindel 97 und Kolben 64 fest miteinander verbunden und bilden eine gemeinsam axialbeweglich geführte Einheit.

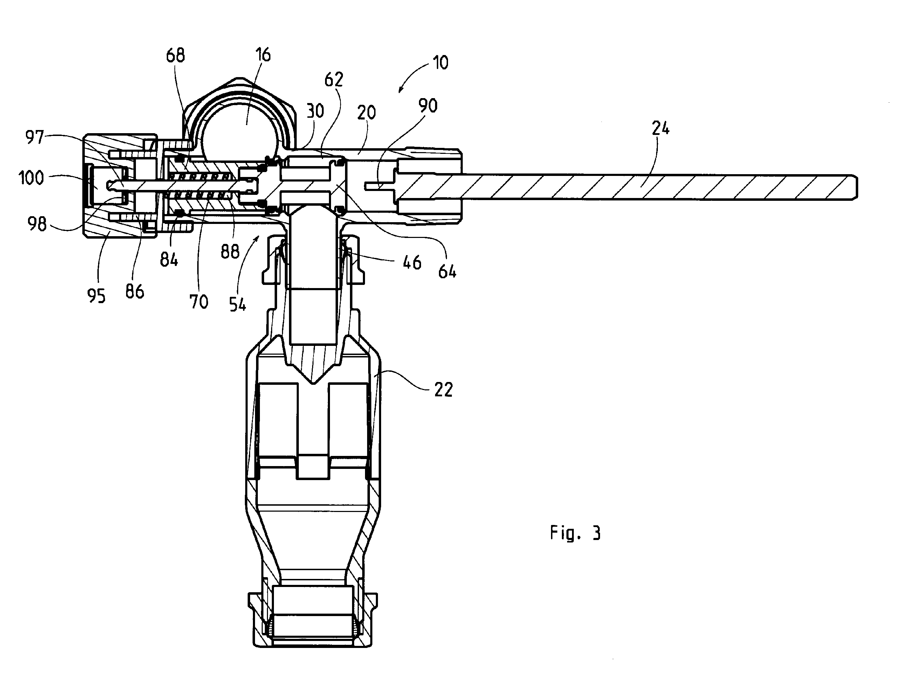

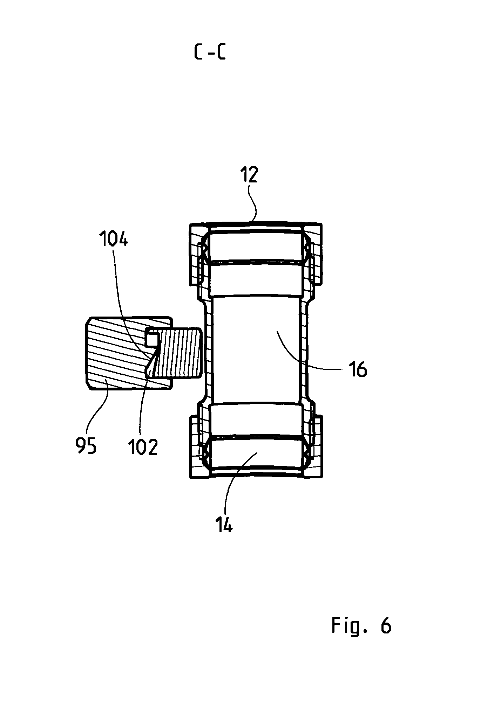

Der Griff 95 sitzt auf dem Profilteil 86. Das Profilteil 86 ist entlang seines Umfangs mit einem sägezahnförmigen Profil 102 versehen. Dies ist in Figur 5 und 6 zu erkennen. Der Griff 95 weist auf der Innenseite einen Vorsprung 104 auf, der sich in axialer Richtung erstreckt. Der Vorsprung 104 ist in Figur 6 zu erkennen. Der sägezahnförmige Vorsprung 104 überstreicht das Sägezahnprofil 102 an dem Profilteil 86, wenn der Griff gedreht wird. Bei der Rotationsbewegung wird der Griff 95 entlang der Schrägen des Profils in Öffnungsrichtung in axialer Richtung nach links in den Darstellungen Figur 2 bis 4 bewegt. Dabei nimmt er die Spindel und den Kolben 64 mit. Mit anderen Worten: eine manuelle Drehung des Griffs 95 führt zur Öffnung der Ventile. Dabei wird der Kessel angelüftet. Wird der Griff 95 weiter gedreht, trifft er auf die steile Kante des Sägezahnprofils und rutscht zurück in seine axiale Ausgangsposition. Dabei wird das Ventil wieder geschlossen. Figur 3 zeigt die Situation, bei welcher das Ventil mittels des Griffs 95 manuell geöffnet wurde. Man erkennt, dass der Temperaturfühler keinen Kontakt mehr mit dem Kolben hat. Das Ventil ist aber dennoch geöffnet.

## Patentansprüche

1. Anordnung zur Steuerung der Temperatur in einem beheizbaren Kessel eines Trinkwassererwärmers, enthaltend:
(a) einen Kaltwassereingang (12);
(b) einen an den Kessel anschließbaren Kaltwasserausgang (14) zum Nachfüllen des Kessels mit kaltem Wasser;
(c) einen Entlastungsablauf (46) zum Auslassen von heißem Wasser aus dem Kessel;
(d) eine Verbindung zwischen dem Kaltwassereingang (12) und dem Entlastungsablauf (46);
(e) ein Steuerventil im Bereich der Verbindung zwischen dem Kaltwassereingang (12) und dem Entlastungsablauf (46) zur Steuerung des Zuflusses von kaltem Wasser in den Entlastungsablauf (46) nach Maßgabe der in dem Kessel herrschenden Temperatur, wobei das Steuerventil einen federbelasteten Kolben (64) umfasst, der in einem zylindrischen Hohlraum (62) axialbeweglich geführt ist, der einerseits zur Steuerung des durch den Entlastungsablauf (46) fließenden Heißwasserstroms aus dem Kessel mit einem ersten Ventilsitz (66) zusammenwirkt, welcher zwischen dem zylindrischen Hohlraum (62) und dem Kessel vorgesehen ist, und andererseits zur Steuerung des Kaltwasserstroms mit einem zweiten Ventilsitz (72) zusammenwirkt, welcher zwischen dem Kaltwassereingang (12) und dem Entlastungsablauf (46) vorgesehen ist,
(f) Mittel zum Anlüften des Kessels,
die einen manuell betätigbaren Griff (95) umfassen, mit welchem der federbelastete Kolben (64) gegen die Federkraft axial in Öffnungsrichtung bewegbar ist, und
(g) einen Heißwasserzufuhrkanal (56) zur Verbindung mit dem Kessel, wobei der Heißwasserzufuhrkanal (56) mit dem zylindrischen Hohlraum (62) fluchtet, und wobei
(h) der Heißwasserzufuhrkanal (56), einen geringeren Durchmesser aufweist als der zylindrische Hohlraum (62),
(i) der Kolben (64), der Heißwasserzufuhrkanal (56) und der zylindrischer Hohlraum (62) koaxial angeordnet sind, **dadurch gekennzeichnet, dass** der erste Ventil sitz von einer Schulter gebildet wird, die dadurch entsteht, dass der Heißwasserzufuhrkanal den geringeren Durchmesser aufweist als der zylindrische Hohlraum, und dass der Griff zum Kolben, zum Heißwasserzufuhrkanal und zum zylindrischen Hohlraum koaxial angeordnet ist.

2. Anordnung nach Anspruch 1, **dadurch gekennzeichnet, dass** der Griff (95) über eine Spindel (97) mit dem Kolben (64) verbunden ist.

3. Anordnung nach Anspruch 2, **dadurch gekennzeichnet, dass** der Griff (95) in einer Richtung drehbeweglich ist.

4. Anordnung nach Anspruch 3, **dadurch gekennzeichnet, dass** der Griff (95) auf eine gehäusefeste Hülse (86) aufgesetzt ist und mit einem Vorsprung oder Profil (104) in ein in einer Richtung blockierendes Sägezahnprofil (102) oder anderes in einer Drehrichtung blockierendes Profil an der Hülse (86) eingreift.

5. Anordnung nach einem der vorgehenden Ansprüche, **dadurch gekennzeichnet, dass** die Längsachse des Heißwasserzufuhrkanals (56) und des damit fluchtenden zylindrischen Hohlraums (62) senkrecht zur Längsachse eines durchgängigen Kaltwasserkanals zwischen Kaltwassereingang (12) und Kaltwasserausgang (14) verläuft.

6. Anordnung nach Anspruch 5, **dadurch gekennzeichnet, dass** die Längsachse des Entlastungsablaufs (46) senkrecht zur Längsachse des Heißwasserzufuhrkanals (56) und senkrecht zur Längsachse des Kaltwasserkanals verläuft.

## Claims

1. Assembly for controlling the temperature in a heatable boiler of a drinking water heater comprising:
(a) a cold water inlet ();
(b) a cold water outlet (14) for refilling the boiler with cold water, adapted to be connected to the boiler;
(c) a relief outlet (46) for discharging hot water from the boiler;
(d) a connection between the cold water inlet (12) and the relief outlet (46);
(e) a control valve in the range of the connection between the cold water inlet (12) and the relief outlet (46), for controlling the flow of cold water to the relief outlet (46) depending on the temperature in the boiler, wherein the control valve comprises a spring-loaded piston (64), which is moveably guided in an axial direction in a cylindrical space (62), which, on one hand, controls the hot-water flow from the boiler through the relief outlet (46) by cooperating with a first valve seat provided between the cylindrical space (62) and the boiler, and on the other hand controls the cold water flow by cooperating with a second valve seat (72), provided between the cold water inlet (12) and the relief outlet (46);
(f) means for venting of the boiler comprising a manually operable handle (95), adapted to axially move the spring-loaded piston (64) against the spring force in the opening direction, and
(g) a hot water supply passage (56) for connecting with the boiler, wherein the hot water supply passage (56) is aligned with the cylindrical space (62), and wherein
(h) the hot water supply passage (56) has a smaller diameter than the cylindrical space (62), and
(i) the piston (64), the hot water supply passage (56) and the cylindrical space (62)
are coaxially assembled,
**characterised in that**
the first valve seat is formed by a shoulder, as a result of the hot water supply passage having a smaller diameter than the cylindrical space and the handle being coaxially assembled to the piston, hot water supply passage, and cylindrical space.

2. Assembly according to claim 1, **characterised in that** the handle (95) is connected to the piston (64) by means of a spindle (97).

3. Assembly according to claim 2, **characterised in that** the handle (95) is rotatable in one direction.

4. Assembly according to claim 3, **characterised in that** the handle (95) is mounted on a sleeve (86) fixed to the housing and having a projection or profile (104) engaging with a saw tooth profile (102), thereby blocking one direction or any other sleeve profile (86) blocking one rotational direction.

5. Assembly according to any of the preceding claims, **characterised in that** the longitudinal plane of the hot water supply passage (56) and the cylindrical space (62) aligned therewith, extends perpendicular to the longitudinal axis of a continuous cold water passage between the cold water inlet (12) and the cold water outlet (14).

6. Assembly according to claim 5, **characterised in that** the longitudinal axis of the relief outlet (46) extends perpendicular to the hot water supply passage (56) and perpendicular to the longitudinal axis of the cold water passage.

## Revendications

1. Disposition pour la commande de la température dans une chaudière, pouvant être chauffée, d'un chauffe-eau pour eau potable, comprenant :
(a) une entrée d'eau froide (12) ;
(b) une sortie d'eau froide (14) pouvant être raccordée à la chaudière et destinée à compléter le niveau d'eau froide de la chaudière ;
(c) un déversoir (46) destiné à évacuer l'eau chaude de la chaudière ;
(d) une connexion entre l'entrée d'eau froide (12) et le déversoir (46) ;
(e) une électrovanne située dans la zone de la connexion entre l'entrée d'eau froide (12) et le déversoir (46) et destinée à commander l'amenée d'eau froide dans le déversoir (46) en fonction de la température régnant dans la chaudière, l'électrovanne comprenant un piston (64) sollicité par un ressort et guidé, de manière à effectuer un déplacement axial, dans un espace creux cylindrique (62) qui agit, d'une part, avec un premier siège de vanne (66), prévu entre l'espace creux cylindrique (62) et la chaudière, afin de commander le flux d'eau chaude sortant de la chaudière par le déversoir (46), et, d'autre part, avec un second siège de vanne (72), prévu entre l'entrée d'eau froide (12) et le déversoir (46), afin de commander le flux d'eau froide,
(f) des moyens destinés à ventiler la chaudière et comportant une poignée (95) à commande manuelle permettant de déplacer le piston (64) sollicité par un ressort axialement dans le sens d'ouverture contre la force du ressort, et
(g) un canal d'amenée d'eau chaude (56) destiné à être connecté à la chaudière, le canal d'amenée d'eau chaude (56) étant aligné sur l'espace creux cylindrique (62),
(h) le canal d'amenée d'eau chaude (56) présentant un diamètre inférieur à celui de l'espace creux cylindrique (62),
(i) le piston (64), le canal d'amenée d'eau chaude (56) et l'espace creux cylindrique (62) étant disposés coaxialement,
**caractérisée en ce que** le premier siège de vanne est formé par un épaulement dû au fait que le canal d'amenée d'eau chaude présente un diamètre inférieur à l'espace creux cylindrique, et la poignée est disposée coaxialement par rapport au piston, au canal d'amenée d'eau chaude et à l'espace creux cylindrique.

2. Disposition selon la revendication 1, **caractérisée en ce que** la poignée (95) est reliée au piston (64) par l'intermédiaire d'une broche (97).

3. Disposition selon la revendication 2, **caractérisée en ce que** la poignée (95) est susceptible d'effectuer un déplacement rotatif dans un sens.

4. Dispositif selon la revendication 3, **caractérisée en ce que** la poignée (95) repose sur un manchon (86) fixe par rapport au boîtier et mord avec une saillie ou un profilé (104) dans un profilé en dent de scie (102) bloquant dans un sens ou un autre profilé situé sur le manchon (86) et bloquant dans un sens de rotation.

5. Disposition selon l'une quelconque des revendications précédentes, **caractérisée en ce que** l'axe longitudinal du canal d'amenée d'eau chaude (56) et de l'espace creux cylindrique (62) aligné sur lui s'étend perpendiculairement à l'axe longitudinal d'un canal d'eau froide continu entre l'entrée d'eau froide (12) et la sortie d'eau froide (14).

6. Disposition selon la revendication 5, **caractérisée en ce que** l'axe longitudinal du déversoir (46) s'étend perpendiculairement à l'axe longitudinal du canal d'amenée d'eau chaude (56) et perpendiculairement à l' axe du canal d'eau froide.
